# FASCICULE DE BREVET EUROPEEN

(11) **EP 4 058 254 B1**
(45) Date de publication et mention de la délivrance du brevet: **18.12.2024**
(21) Numéro de dépôt: 20803175.7
(22) Date de dépôt: 12.11.2020
(51) Int. Cl.: B25J 7/00, B25J 9/00

(54) **DISPOSITIF POUR MICROACTIONNEUR ET MICROACTIONNEUR EQUIPE D'UN TEL DISPOSITIF**
VORRICHTUNG FÜR EIN MIKROSTELLGLIED UND MIT EINER SOLCHEN VORRICHTUNG AUSGERÜSTETES MIKROSTELLGLIED
DEVICE FOR A MICROACTUATOR, AND MICROACTUATOR EQUIPPED WITH SUCH A DEVICE

(30) Priorité: 13.11.2019 FR 1912663
(43) Date de publication de la demande: 21.09.2022
(73) Titulaire: Percipio Robotics, 25000 Besançon (FR)
(72) Inventeur: HERIBAN, David, 25000 BESANÇON (FR)
(74) Mandataire: Cabinet Netter
(86) Numéro de dépôt international: PCT/EP2020/081837
(87) Numéro de publication internationale: WO 2021/094415

(56) Documents cités:
- CN-A- 105 236 349
- CN-A- 105 406 755
- CN-A- 109 231 152
- FR-A1- 3 063 668
- JP-A- H05 293 778
- US-A1- 2017 030 403
- WANG FUJUN ET AL: "Design of a Novel Dual-Axis Micromanipulator With an Asymmetric Compliant Structure", IEEE/ASME TRANSACTIONS ON MECHATRONICS, IEEE SERVICE CENTER, PISCATAWAY, NJ, US, vol. 24, no. 2, 1 April 2019 (2019-04-01), pages 656 - 665, XP011719797, ISSN: 1083-4435, [retrieved on 20190415], DOI: 10.1109/TMECH.2019.2893681

## Description

L'invention concerne le domaine des dispositifs pour microactionneurs, et en particulier pour pinces microtechniques.

Les microactionneurs sont des dispositifs mécaniques capables de produire des mouvements sur de très petites courses (ci-après appelées courses d'actionneur). En particulier, les pinces microtechniques sont des microactionneurs réalisant la préhension de petits objets au moyen de doigts se déplaçant le long d'une course d'actionneur. Ces doigts sont généralement montés sur des porte-doigt, aussi appelés organes terminaux.

Les pinces microtechniques, et plus généralement les microactionneurs, sont le plus souvent entraînées par un actionneur piézoélectrique capable de se dilater et de se contracter, c'est-à-dire se déformer, sous l'action d'un champ électrique. Un actionneur piézoélectrique se présente généralement sous la forme d'un empilement, aussi appelé *« stack »,* le long d'une direction d'empilement. Cet empilement se déforme longitudinalement, contrôlé par un champ électrique le traversant sur sa longueur. Cette déformation contrôlée permet une préhension précise sur de très courtes courses.

La course d'un empilement piézoélectrique est d'environ un millième (1/1000e) de sa longueur. La course d'actionneur nécessaire aux applications industrielles doit être au minimum de 400 µm. Afin d'obtenir un rapport course d'actionneur sur compacité de pince microtechnique qui soit raisonnable, les pinces microtechniques comprennent une structure amplificatrice entre l'empilement piézoélectrique et les porte-doigt. Cette structure amplificatrice transforme la déformation de l'empilement piézoélectrique en un mouvement des porte-doigt en la multipliant par un facteur d'amplification.

Cependant, les structures amplificatrices actuelles pour microactionneur ne donnent pas satisfaction.

Par exemple, CN 105 236 349 divulgue un dispositif pour micro actionneur selon l'art antérieur.

Le facteur d'amplification des structures amplificatrices connues est faible, en général inférieur à 5:1. De fait, les pinces microtechniques présentent un encombrement important, jusqu'à 500 mm de long. Leur intégration dans une chaîne industrielle est complexe, voire impossible.

Ces structures amplificatrices reposent sur l'assemblage complexe d'un grand nombre d'éléments fragiles, comme par exemple le brevet FR 1758847 qui décrit une pince microtechnique dont la structure amplificatrice est tridimensionnelle et à membrane. Les pinces microtechniques connues ne sont pas adaptées à une production de masse, et leur durée de vie est faible.

Dans certaines structures amplificatrices connues, le mouvement des doigts ne préserve pas leur orientation et est asymétrique. On connaît des pinces microtechniques dont un seul doigt est mobile, ou dont les deux doigts sont animés de mouvements différents. De telles pinces microtechniques sont difficilement utilisables pour les manipulations précises imposées par les applications industrielles.

On connaît notamment l'article Wang, Fujun et al. "Design of a Novel Dual Axis Micromanipulator With an Asymmetric Compilant Structure." IEEE/ASME Transactions on Mechatronics 24 (2019): 656-665. qui décrit une structure amplificatrice dont le rapport d'amplification peut atteindre 11:1 pour l'un des doigts et 4,6:1 pour l'autre doigt. Cette structure amplificatrice présente un facteur d'amplification supérieur aux autres structures amplificatrices connues, mais au prix d'une forte asymétrie. De plus, son grand nombre de pièces la rend complexe, fragile et inexploitable.

L'invention vient améliorer la situation.

À cet effet, l'invention propose un dispositif pour microactionneur selon la revendication 1.

Le facteur d'amplification du dispositif de l'invention est élevé. Il peut dépasser 30:1 (ou 30/1), c'est-à-dire que pour 1 µm de déformation longitudinale de l'actionneur, les organes terminaux se déplacent d'au moins 30 µm, voire 50:1. Ce dispositif est en outre de fabrication aisée. La solidité du dispositif est par ailleurs bien supérieure à celle de structures classiques, du fait du faible nombre de pièces et de leur simplicité.

D'autres caractéristiques et avantages de l'invention seront exposés en détail dans la description ci-après, faite en référence aux dessins annexés, sur lesquels :
- [Fig. 1] représente une vue en perspective d'un microactionneur équipé d'un dispositif microtechnique selon l'invention,
- [Fig. 2] représente une vue de dessus du microactionneur de la figure 1,
- [Fig. 3] représente une vue de dessous du microactionneur de la figure 1,
- [Fig. 4] représente un éclaté du microactionneur de la figure 1,
- [Fig. 5] représente une vue de dessous du dispositif de la figure 1,
- [Fig. 6] représente une vue de dessus du dispositif de la figure 5
- [Fig. 7] représente une variante du dispositif qui ne fait pas partie de l'invention.

Les dessins annexés contiennent, pour l'essentiel, des éléments de caractère certain. Ils pourront donc non seulement servir à mieux faire comprendre la présente invention, mais aussi contribuer à sa définition, le cas échéant.

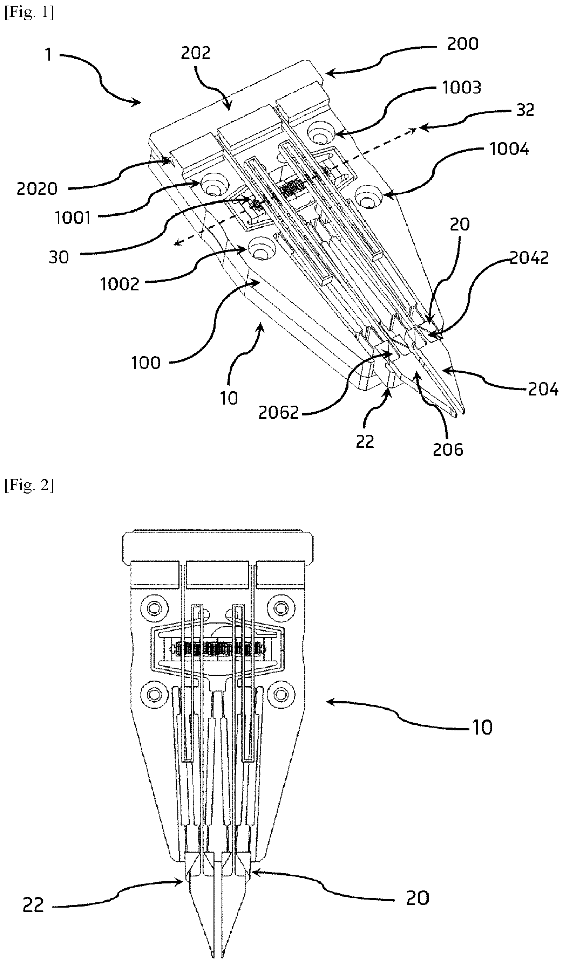

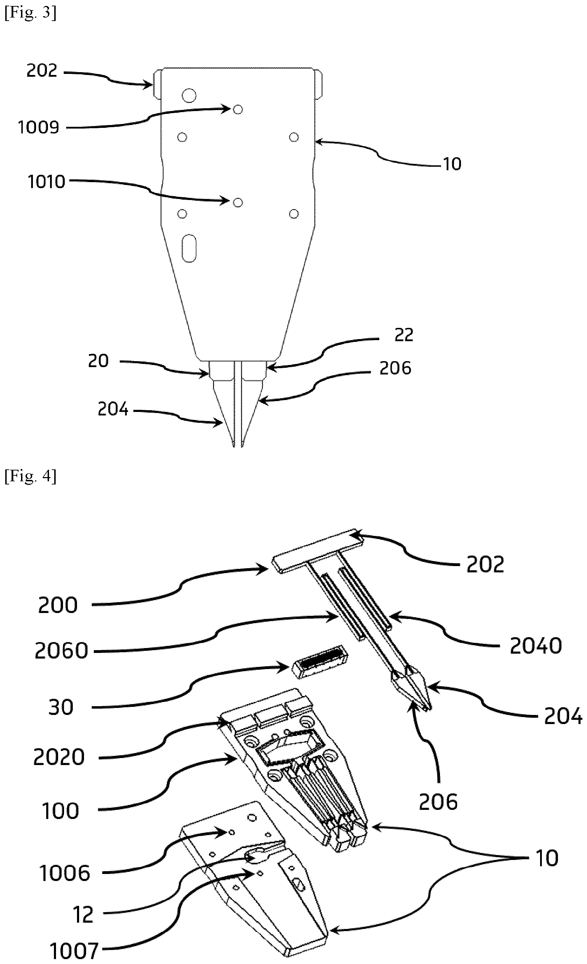

Il est maintenant fait référence aux figures 1 à 6.

Un microactionneur 1 comprend une base 10, deux organes terminaux 20 et 22, et un actionneur 30 pour actionner lesdits organes terminaux 20 et 22.

Dans un mode de réalisation, le microactionneur 1 est une pince microtechnique et les organes terminaux sont des organes de préhension, par exemple des porte-doigt pouvant chacun recevoir un doigt. L'actionneur 30 peut actionner les porte-doigt 20 et 22 afin de réaliser une préhension par le microactionneur 1.

Les porte-doigt 20, 22 peuvent recevoir des doigts respectifs pour former une pince microtechnique. Dans un mode de réalisation, le microactionneur 1 comprend un embout 200, monté sur la base 10, comportant un support 202 et deux doigts 204 et 206 reliés au support 202 par un élément de liaison respectif 2040, 2060 souple, comme cela est décrit dans le brevet EP2718066 de la Demanderesse. Chaque doigt 204, 206 comprend un socle de fixation 2042, 2062 respectif par lequel il est fixé sur l'un des porte-doigt 20, 22, ici par coopération de forme. Le support 202 peut venir en prise dans une encoche 2020 ménagée dans la base 10, afin de monter l'embout 200 sur la base 10. En variante, comme décrit dans le brevet EP2718066, le support pourrait être monté dans une gorge ménagée dans la base 10. En variante, les doigts pourraient être formés d'un seul tenant avec les porte-doigt 20 et 22. Les doigts pourraient alternativement être fixés à la base par vissage et/ou collage.

Ici, l'actionneur 30 est un actionneur piézoélectrique. L'actionneur 30 est apte à se déformer, c'est-à-dire se dilater et se contracter, le long d'une direction d'actionneur 32, en fonction du champ électrique le traversant. Cette déformation est bidirectionnelle, c'est-à-dire que l'actionneur 30 peut se dilater dans les deux sens le long de sa direction d'actionneur 32. L'actionneur 30 se présente ici sous la forme d'un empilement piézoélectrique parallélépipédique le long de la direction d'actionneur 32. L'empilement piézoélectrique peut être un empilement de la marque PI, par exemple le modèle parallélépipédique P-883.30 de dimensions 3x3x13,5 mm. En variante, l'actionneur 30 pourrait être un actionneur électromagnétique ou thermique.

Le microactionneur 1 peut être monté sur un dispositif industriel, par exemple fixé au bout d'un bras robotisé. La base 10 du microactionneur 1 est par exemple munie de deux trous 1009 et 1010 via lesquels le microactionneur 1 peut être fixé.

Dans l'exemple décrit ici, la base 10 du microactionneur comprend, sur l'un de ses côtés, un évidement 12 servant à faire passer un ou plusieurs câbles pour l'alimentation et la commande de l'actionneur 30.

Le microactionneur 1 comprend en outre une structure 100 amplificatrice pour transmettre le mouvement de l'actionneur 30 aux porte-doigt 20 et 22. La structure 100 est ici généralement plane. La structure 100 peut être fabriquée dans une plaque de 3,5 mm d'épaisseur. Ladite plaque peut par exemple être en aluminium, en acier ou en silicium. La structure 100 est fixée à la base 10, ici vissée via quatre trous de vis 1001, 1002, 1003 et 1004. La structure 100 loge l'actionneur 30 et forme les deux porte-doigt 20 et 22.

La structure 100 forme ici l'encoche 2020 dans laquelle le support 202 de l'embout 200 formant les deux doigts 204 et 206 peut venir en prise. En variante, l'encoche 2020 pourrait être ménagée dans une autre partie de la base 10.

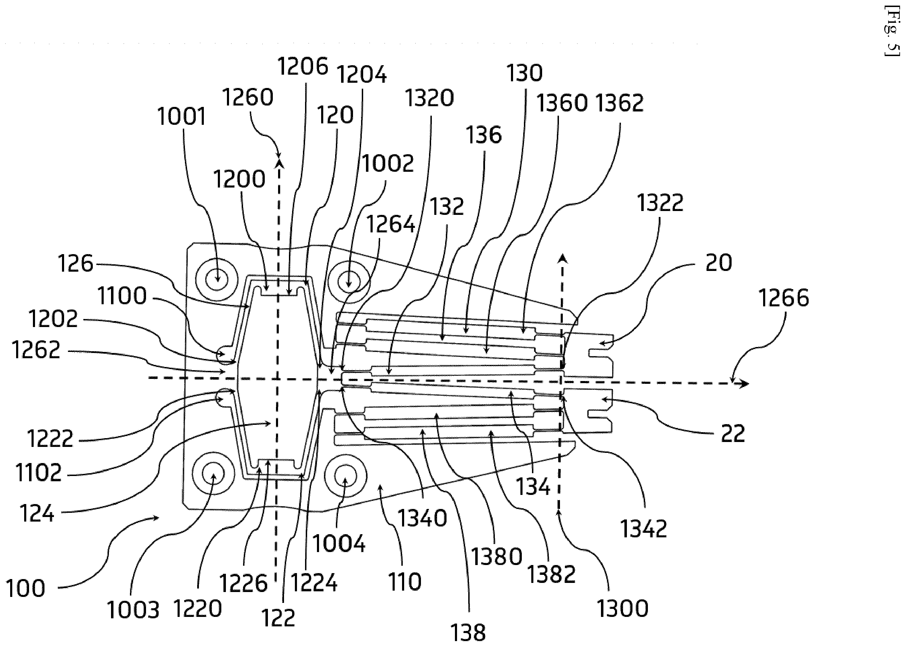

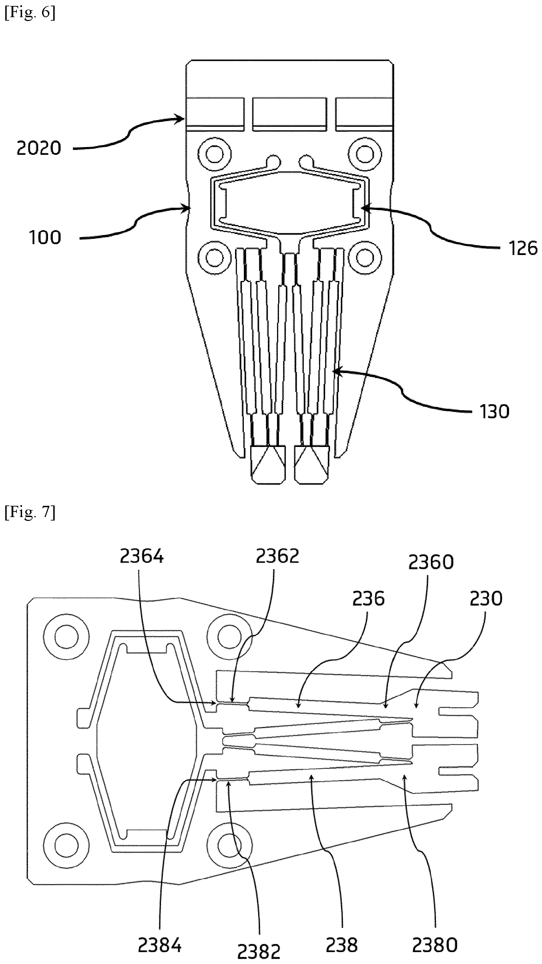

Il est maintenant fait référence aux figures 5 et 6.

La structure 100 comprend un corps 110 par lequel elle peut être fixée à la base 10 du microactionneur 1. Ici, le corps 110 comprend les quatre trous de vis 1001, 1002, 1003 et 1004 via lesquels la structure 100 peut être fixée à la base 10. La portion de la structure 100 formant l'encoche 2020 n'est pas représentée sur la figure 5, à des fins de lisibilité, mais est visible sur la figure 6. L'encoche 2020 est ici formée dans le corps 110 de la structure 100.

La structure 100 comprend deux parois 120 et 122 qui forment un logement 124 pour l'actionneur 30 (non représenté sur les figures 5 et 6). Les deux parois 120 et 122 ont une forme générale de cuvette, par exemple en forme de « U » (ou, en variante, de « V »), et se font face. Les deux parois 120 et 122 forment ensemble une première sous-structure 126 allongée dans une première direction 1260.

Ici, les deux parois 120 et 122 sont symétriques et de formes générales analogues. En variante, les deux parois 120 et 122 pourraient être asymétriques et/ou de formes générales différentes.

La première paroi 120 et la deuxième paroi 122 en cuvette présentent chacune un fond respectif 1200, 1220, un premier bord respectif 1202, 1222 et un deuxième bord respectif 1204, 1224 opposé au premier bord respectif 1202, 1222. Les parois 120 et 122 se joignent d'un côté par leurs premiers bords respectifs 1202 et 1222 en une portion de fixation 1262 et de l'autre côté par leurs deuxièmes bords respectifs 1204 et 1224 en une portion de transmission 1264. Ici, les deux parois (donc les deux formes de cuvettes se faisant face) forment ensemble un hexagone allongé dont les côtés sont deux à deux parallèles.

La première sous-structure 126 est fixée au corps 110 par la portion de fixation 1262. La portion de fixation 1262 et la portion de transmission sont ici plus épaisses que le reste des parois 120 et 122.

Plus généralement, les deux parois 120 et 122 forment un hexagone allongé. En variante, les deux parois 120 et 122 pourraient former un losange, une ellipse, un ovale ou toute autre forme sensiblement allongée dans la première direction 1260.

Les deux parois 120 et 122 logent longitudinalement l'actionneur 30 (non représenté sur la figure 5) dans le logement 124. La direction d'actionneur 32 de l'actionneur 30 monté dans le logement 124 coïncide avec la première direction 1260 de la première sous-structure 126. L'actionneur 30 est de préférence monté préchargé dans le logement 126, c'est-à-dire en appui continu contre le fond 1200, 1220 de chaque paroi 120, 122, y compris à l'état de repos. L'actionneur 30 peut facultativement être collé aux fonds 1200 et 1220 des parois 120 et 122, afin de sécuriser son montage et d'améliorer la durée de vie du microactionneur.

Ici, les fonds 1200 et 1220 présentent des faces respectives 1206 et 1226 parallèles et en regard l'une de l'autre. L'actionneur 30 monté dans le logement 126 est en contact continu avec les faces 1206 et 1226.

Les deux parois 120 et 122 sont déformables. L'actionneur 30, lorsqu'il se dilate (respectivement se contracte) le long de la première direction 1260 éloigne (respectivement rapproche) les deux fonds 1200 et 1220 l'un de l'autre. Les deux fonds 1200 et 1220 qui s'éloignent (respectivement se rapprochent) l'un de l'autre entraînent le rapprochement (respectivement l'éloignement) mutuel de la portion de fixation 1262 et de la portion de transmission 1264. La portion de fixation 1262 étant fixée au corps 110, la portion de transmission 1264 se meut relativement au corps 110 et transmet la dilatation (respectivement la contraction) de l'actionneur 30. La portion de transmission 1264 se déplace le long d'une deuxième direction 1266 sensiblement perpendiculaire à la première direction 1260 d'une distance égale au mouvement relatif des deux fonds 1200 et 1222 multiplié par un premier facteur d'amplification prédéterminé.

Le premier facteur d'amplification dépend de la géométrie de la première sous-structure 126. En particulier, le premier facteur d'amplification dépend de l'allongement de la forme générale de la première sous-structure 126 et de l'épaisseur des parois 120 et 122. Dans le mode de réalisation décrit ici, le premier facteur d'amplification est compris entre 2:1 et 7:1.

La structure 100 comporte en outre une seconde sous-structure amplificatrice 130, à l'opposé de la première sous-structure 126 par rapport à de la portion de transmission 1264. La seconde sous-structure amplificatrice 130 transmet le mouvement de la portion de transmission 1264 aux porte-doigt 20 et 22.

La seconde sous-structure 130 comprend pour chaque porte-doigt 20, 22 un bras respectif 132, 134. Chaque bras 132, 134 est fixé en une première extrémité respective 1320, 1340 à la portion de transmission 1264. Chaque bras 132, 134 est fixé à son porte-doigt 20, 22 respectif en une deuxième extrémité respective 1322, 1342 opposée à sa première extrémité respective 1320, 1340. Les bras 132 et 134 sont de forme générale allongée, et s'étendent longitudinalement à proximité l'un de l'autre, en formant un angle inférieur à 10 degrés, de préférence inférieur à 5 degrés, avec la deuxième direction 1266.

La seconde sous-structure 130 comprend en outre pour chaque porte-doigt 20, 22 une articulation 136, 138 respective. Les articulations 136 et 138 permettent de contrôler le déplacement des porte-doigt 20 et 22 par rapport au corps 110. Les articulations 136, 138 sont sensiblement symétriques par rapport à la deuxième direction 1266. Ici, les deux articulations 136 et 138 sont situées de part et d'autre des bras 132 et 134.

Dans un mode de réalisation, chaque articulation 136, 138 comprend deux tiges respectives 1360 et 1362, 1380 et 1382 allongées. Les deux tiges 1360 et 1362 (respectivement 1380 et 1382) de l'articulation 136 (respectivement 138) sont parallèles et de même longueur, ou, dit autrement, forment deux côtés opposés d'un parallélogramme. Les deux autres côtés dudit parallélogramme s'expriment dans une troisième direction 1300, qui est optionnellement sensiblement perpendiculaire à la deuxième direction 1266. Cet agencement « en parallélogramme » des deux articulations 136 et 138 contraint les porte-doigt 20 et 22 à se mouvoir parallèlement et de manière symétrique par rapport à la deuxième direction 1266. L'angle entre la direction longitudinale des tiges 1360, 1362, 1380 et 1382 et la deuxième direction 1266 est inférieur à 10°, de préférence inférieur à 5°.

Lorsque la portion de transmission 1264 se rapproche (respectivement s'éloigne) de la portion de fixation 1262, la deuxième sous-structure 130 entraîne les porte-doigt 20, 22 par le biais des bras 132 et 134 en un mouvement de rapprochement (respectivement d'éloignement) le long de la troisième direction 1300. Le déplacement relatif des porte-doigt 20 et 22 est égal au mouvement relatif de la portion de transmission 1264 par rapport à la portion de fixation 1262 multiplié par un deuxième facteur d'amplification prédéterminé. Dit autrement, la course d'actionneur des porte-doigt 20 et 22 est linéaire, et s'exprime le long la troisième direction 1300.

Le deuxième facteur d'amplification dépend de la géométrie de la deuxième sous-structure 130. En particulier, ce deuxième facteur d'amplification dépend de l'angle entre les bras 132 et 134 et la deuxième direction 1266, entre les tiges 1360, 1362, 1380 et 1382 et la deuxième direction 1266, de la longueur des tiges 1360, 1362, 1380 et 1382, et de la longueur des bras 132 et 134. Dans le mode de réalisation décrit, le deuxième facteur d'amplification est supérieur à 2:1, et peut valoir jusqu'à 15:1, voire jusqu'à 20:1.

Le facteur d'amplification total de la structure 100 est égal au produit du premier facteur d'amplification et du deuxième facteur d'amplification. Dans l'exemple décrit ici, le facteur d'amplification total de la structure 100 vaut 50:1, mais pourrait atteindre jusqu'à 140:1, ce qui est considérablement supérieur aux structures amplificatrices connues. En outre, les mouvements des porte-doigt 20 et 22 sont symétriques et parallèles entre eux. La structure 100 permet donc d'atteindre de très hauts facteurs d'amplification, sans les inconvénients de fragilité, de complexité ou d'asymétrie des structures d'amplification connues.

La raideur relative de la forme générale de la première sous-structure 126 augmente la rigidité de la deuxième sous-structure 130. Ainsi, la première sous-structure 126 procure une stabilité mécanique à l'ensemble de la structure 100. La forme de la seconde sous-structure 130 permet à la structure 100 d'atteindre un facteur d'amplification très élevé. La seconde sous-structure 130 apporte en outre parallélisme et symétrie dans le mouvement des porte-doigt 20, 22 de la structure 100. Les deux sous-structures 126 et 130 fonctionnent ainsi en synergie.

La structure 100 est ici monobloc, et formée d'une seule plaque profilée. Sa fabrication est ainsi très simple, son assemblage aisé (il suffit de quatre vis). La structure 100 peut être :
- usinée par électroérosion (EDM),
- usinée par décolletage,
- moulée par injection (« métal injection molding » en anglais),
- fabriquée par microfrittage,
- réalisée par fabrication additive (également appelée « impression 3D »), ou
- réalisée par usinage physico-chimique de silicium en salle blanche (par exemple dans le cas d'une fabrication à échelle réduite).

Ces procédés de fabrications sont cités à titre d'exemple et ne sont pas limitatifs.

La structure 100 permet d'atteindre une course d'actionneur entre 50 µm et 3 mm. Dans l'exemple décrit ici, la course d'actionneur vaut environ 800 µm, et l'encombrement du microactionneur est de 45x23x7,5 mm. Un actionneur muni d'une telle structure 100 présente ainsi un rapport encombrement/course bien plus avantageux que les actionneurs munis de structures amplificatrices connues.

Dans la structure 100, les bras 132 et 134 et les articulations 136 et 138 peuvent pivoter en leurs extrémités par rapport au corps 110, à leur porte-doigt respectif 20, 22 et à la portion de transmission 1264, par déformation en leurs extrémités. Les déformations sont élastiques, du fait des mouvements des diverses parties du corps 110 qui sont très faibles, de l'ordre de moins de 2° et de moins de 2 mm.

Les bras 132 et 134 et/ou les tiges 1360, 1362, 1380 et 1382 peuvent présenter des extrémités amincies. Dans l'exemple illustré sur la figure 5, les extrémités des bras 132 et 134 et des tiges 1360, 1362, 1380 et 1382 sont toutes amincies. L'amincissement desdites extrémités améliore la capacité des bras 132 et 134 et des tiges 1360, 1362, 1380 et 1382 à pivoter par rapport à ce sur quoi ils sont respectivement fixés.

Optionnellement, le corps peut présenter des évidements 1100 et 1102 à la jonction entre les premiers bords respectifs 1202 et 1222 des parois 120 et 122. Cela permet d'éviter d'avoir des arêtes vives à cette jonction entre les parois 120 et 122 et le corps 110, ce qui y diminue les contraintes locales dans le matériau de la structure 100.

La structure 100 ainsi décrite présente un facteur d'amplification, une simplicité de conception et de fabrication qui sont bien plus avantageux que les structures amplificatrices de l'état de l'art.

Dans le mode de réalisation décrit ici, la structure 100 présente une symétrie plan par rapport à un plan de symétrie perpendiculaire à la première direction 1260. Le plan de symétrie contient la deuxième direction 1266. Le plan de symétrie est situé entre les deux bras 132 et 134, entre les deux parois en cuvette 120 et 122 et entre les porte-doigt 20 et 22. La symétrie plan de la structure 100 permet aux porte-doigt de se mouvoir symétriquement l'un par rapport à l'autre.

On pourrait en variante intervertir les deux paires de tiges et les deux articulations 136 et 138, c'est-à-dire relier la portion de transmission 1264 aux deux porte-doigt 20, 22 par les deux paires de tiges 1360, 1362 et 1380, 1382 respectives, et relier les deux porte-doigt 20, 22 au corps par les deux bras 132 et 134.

Il est maintenant fait référence à la figure 7.

Dans cet exemple qui ne fait pas parti de l'invention, la structure 100 présente une troisième sous-structure 230 à la place de la deuxième sous-structure 130. Ici, chaque articulation de la troisième sous-structure 230 est formée d'une seule tige 236, 238. Cette tige 236, 238 est solidaire en une première extrémité 2360, 2380 de son porte-doigt 20, 22 respectif, et est fixée au corps 110 de manière pivotante en une deuxième extrémité 2362, 2382.

La structure 100 est ici monobloc et le pivotement en les deuxièmes extrémités 2362, 2382 se fait par déformation élastique à la jonction 2364, 2384 entre le corps 110 et la deuxième extrémité 2362, 2382. Les deuxièmes extrémités 2362 et 2382 peuvent être amincies de sorte à améliorer ce pivotement par déformation élastique.

Le mouvement des porte-doigt 20 et 22 est symétrique. Comme il n'y a plus qu'un seul pivotement dans la troisième structure 230, les porte-doigt 20 et 22 décrivent un mouvement angulaire autour de la jonction 2364, 2368.

Cette troisième structure 230 présente un facteur d'amplification plus élevé encore que celui de la deuxième sous-structure 130, au prix de la perte du parallélisme des mouvements des porte-doigt 20 et 22.

Il a été décrit une structure amplificatrice 100 globalement symétrique. Cette symétrie permet aux organes terminaux de se mouvoir symétriquement. Cependant, on pourrait avoir une structure 100 asymétrique qui conserverait un facteur d'amplification très élevé et une solidité bien supérieure à celle des structures connues, grâce au faible nombre de pièces et leur simplicité.

Il a été décrit une structure amplificatrice 100 destinée à un microactionneur de type pince microtechnique. La structure amplificatrice selon l'invention permet de déplacer par commande piézoélectrique des organes terminaux sur des courses très précises, symétriques voire parallèles. Cela ouvre la voie à de nombreuses applications en plus des pinces microtechniques.

Dans un mode de réalisation, le microactionneur 1 est un contacteur électrique microtechnique. Les deux organes terminaux 20 et 22 comprennent chacun un organe de contact respectif, lesdits deux organes de contact étant électriquement reliés lorsqu'ils sont en contact l'un de l'autre. L'actionneur 30 entraîne alors les organes terminaux pour commuter les organes de contact entre un état passant (où les organes de contact sont en contact) et un état coupé (où les organes de contact sont à distance l'un de l'autre et électriquement séparés).

Grâce à la structure amplificatrice, ce contacteur électrique microtechnique est très compact, actif et pilotable, en particulier avec de très faibles courants de commande de l'actionneur. En outre, la force de serrage que peuvent développer les organes terminaux permet d'envisager l'utilisation d'un tel actionneur dans des situations de fortes intensités ou de fortes tensions. La commutation de ce contacteur électrique microtechnique est rapide, moins de 10 ms, voire moins de 1 ms.

Dans un autre mode de réalisation, le microactionneur est un diaphragme optique ou un obturateur optique. Ici, les organes terminaux comprennent chacun un demi-diaphragme respectif. Les deux demi-diaphragmes ont une forme générale de « V » à angle droit, et se font symétriquement face, leurs coins respectifs à distance l'un de l'autre. Les deux formes générales de « V » se chevauchent, les deux demi-diaphragmes formant ensemble un diaphragme carré. Les deux demi-diaphragmes s'éloignent et se rapprochent sous l'effet de l' actionneur, ce qui permet de contrôler les dimensions du diaphragme carré qu'ils forment.

Là encore, la vitesse d'actionnement du microactionneur est avantageusement brève (inférieure à 10 ms, voire à 1 ms). La taille du diaphragme peut être contrôlée très précisément. Le diaphragme reste en outre centré sur un axe optique.

L'invention ne se limite pas aux exemples cités ci-dessus, et trouve son intérêt dans tous les domaines où le déplacement précis de deux organes terminaux sur de courtes distances de manière symétrique, voire parallèle, est requis.

## Revendications

1. Dispositif pour microactionneur comprenant
- un corps (110),
- deux organes terminaux (20, 22) articulés (136, 138 ; 236, 238) sur le corps (110), situés d'un côté de celui-ci,
- deux parois déformables en cuvette (120, 122) qui se font face, agencées pour loger un actionneur (30), deux premiers bords (1202, 1222) respectifs de ces parois (120, 122) situés d'un côté étant fixés sur le corps (110), tandis que deux deuxièmes bords (1204, 1224) respectifs de ces parois (120, 122) situés d'un autre côté se déplacent consécutivement à une déformation des parois (120, 122) sous l'effet de l'actionneur (30),
- ce déplacement étant transmis par deux bras (132, 134) qui aboutissent aux deux organes terminaux (20, 22) respectifs,
dans lequel les parois (120, 122) en cuvette présentent chacune un fond respectif (1200, 1220) contre lequel l'actionneur (30) vient en appui, et dans lequel les deux organes terminaux (20, 22) sont articulés sur le corps (110) par des tiges respectives (1360, 1362, 1380, 1382 ; 2360, 2380), et dans lequel les deux organes terminaux (20, 22) sont articulés sur le corps (110) par deux paires respectives de tiges (1360, 1362 ; 1380, 1382) sensiblement parallèles et de même longueur, et dans lequel les extrémités (1322, 1342) des tiges (1360, 1362, 1380, 1382) côté organes terminaux (20, 22) sont sensiblement alignées, et dans lequel la déformation de l'actionneur (30) est une dilatation longitudinale ou une contraction longitudinale contre les deux fonds (1200, 1220) des parois (120, 122),
dans lequel une dilatation de l'actionneur (30) contre les deux fonds (1200, 1220) entraîne le rapprochement des premiers bords (1202, 1222) et des deuxièmes bords (1204, 1224), ce par quoi les deuxièmes bords (1204, 1224) entraînent symétriquement un rapprochement relatif des organes terminaux (20, 22) par le biais des bras (132, 134), et
dans lequel une contraction de l'actionneur (30) contre les deux fonds (1200, 1220) entraîne l'éloignement des premiers bords (1202, 1222) et des deuxièmes bords (1204, 1224), ce par quoi les deuxièmes bords (1204, 1224) entraînent symétriquement un éloignement relatif des organes terminaux (20, 22) par le biais des bras (132, 134).

2. Dispositif selon la revendication 1, dans lequel le rapprochement relatif et l'éloignement relatif des organes terminaux s'exprime généralement le long d'une course linéaire (1300).

3. Dispositif selon l'une des revendications précédentes, dans lequel les deux parois en cuvette (120, 122) forment généralement un losange, un hexagone ou un ovale.

4. Dispositif selon l'une des revendications précédentes, dans lequel le dispositif (100) est d'un seul tenant.

5. Dispositif selon l'une des revendications précédentes, dans lequel le dispositif (100) est formé d'une plaque profilée.

6. Dispositif selon l'une des revendications précédentes, dans lequel le dispositif présente un facteur d'amplification supérieur à 30:1.

7. Dispositif selon l'une des revendications 2 à 11, dans lequel les tiges (1360, 1362, 1380, 1382 ; 2360, 2380) et/ou les bras (132, 134) sont amincies à une ou plusieurs de leurs extrémités (1320, 1322, 1340, 1342 ; 2362, 2382).

8. Dispositif selon l'une des revendications précédentes, dans lequel le microactionneur est une pince microtechnique, et les organes terminaux (20, 22) comprennent chacun un porte-doigt et un doigt monté sur ledit porte-doigt.

9. Dispositif selon l'une des revendications précédentes, dans lequel l'actionneur (30) est un actionneur piézoélectrique, de préférence un empilement piézoélectrique (34).

10. Dispositif selon l'une des revendications précédentes, dans lequel le dispositif est symétrique par rapport à un plan de symétrie situé entre les deux parois (120, 122), entre les deux bras (132, 134) et entre les deux organes terminaux (20, 22).

## Patentansprüche

1. Vorrichtung für ein Mikrostellglied, umfassend
- einen Körper (110),
- zwei Endorgane (20, 22), die an den Körper (110) angelenkt (136, 138; 236, 238) sind, die sich auf einer Seite desselben befinden,
- zwei in eine Mulde (120, 122) verformbare Wände, die einander zugewandt sind, die angeordnet sind, um ein Stellglied (30) aufzunehmen, wobei zwei jeweilige erste Ränder (1202, 1222) dieser Wände (120, 122), die sich auf einer Seite befinden, an dem Körper (110) befestigt sind, während sich zwei jeweilige zweite Ränder (1204, 1224) dieser Wände (120, 122), die sich auf einer anderen Seite befinden, infolge einer Verformung der Wände (120, 122) unter der Wirkung des Stellglieds (30) verschieben,
- wobei diese Verschiebung durch zwei Arme (132, 134) übertragen wird, die in den jeweiligen beiden Endorganen (20, 22) enden,
wobei die Wände (120, 122) in Form einer Mulde jeweils einen jeweiligen Boden (1200, 1220) aufweisen, an den sich das Stellglied (30) anlegt, und in dem die beiden Endorgane (20, 22) an den Körper (110) durch jeweilige Stifte (1360, 1362, 1380, 1382; 2360, 2380) angelenkt sind, und in dem die beiden Endorgane (20, 22) am Körper (110) durch zwei jeweilige im Wesentlichen parallele und gleich lange Stiftpaare (1360, 1362 ; 1380, 1382) angelenkt sind, und wobei die Enden (1322, 1342) der Stifte (1360, 1362, 1380, 1382) auf Seiten der Endorgane (20, 22) im Wesentlichen fluchten, und wobei die Verformung des Stellglieds (30) eine Ausdehnung in der Längsrichtung oder ein Zusammenziehen in der Längsrichtung gegen die beiden Böden (1200, 1220) der Wände (120, 122) ist,
wobei eine Ausdehnung des Stellglieds (30) gegen die beiden Böden (1200, 1220) zu einer Annäherung der ersten Ränder (1202, 1222) und der zweiten Ränder (1204, 1224) führt, wodurch die zweiten Ränder (1204, 1224) symmetrisch zu einer Annäherung der Endorgane (20, 22) zueinander anhand der Arme (132, 134) führen, und
wobei ein Zusammenziehen des Stellglieds (30) gegen die beiden Böden (1200, 1220) zu einer Entfernung der ersten Ränder (1202, 1222) und der zweiten Ränder (1204, 1224) führt, wodurch die zweiten Ränder (1204, 1224) symmetrisch zu einer Entfernung der Endorgane (20, 22) zueinander anhand der Arme (132, 134) führen.

2. Vorrichtung nach Anspruch 1, wobei die Annäherung und die Entfernung der Endorgane zueinander im Allgemeinen entlang eines linearen Weges (1300) zum Ausdruck kommt.

3. Vorrichtung nach einem der vorstehenden Ansprüche, wobei die beiden Wände in Form einer Mulde (120, 122) im Allgemeinen eine Raute, ein Sechseck oder ein Oval bilden.

4. Vorrichtung nach einem der vorstehenden Ansprüche, wobei die Vorrichtung (100) aus einem Stück ist.

5. Vorrichtung nach einem der vorstehenden Ansprüche, wobei die Vorrichtung (100) aus einer profilierten Platte gebildet ist.

6. Vorrichtung nach einem der vorstehenden Ansprüche, wobei die Vorrichtung einen Verstärkungsfaktor von mehr als 30:1 aufweist.

7. Vorrichtung nach einem der Ansprüche 2 bis 11, wobei die Stifte (1360, 1362, 1380, 1382; 2360, 2380) und/oder die Arme (132, 134) an einem oder mehreren ihrer Enden (1320, 1322, 1340, 1342; 2362, 2382) dünner sind.

8. Vorrichtung nach einem der vorstehenden Ansprüche, wobei das Mikrostellglied eine Mikrotechnikzange ist, und die Endorgane (20, 22) jeweils einen Fingerträger und einen Finger umfassen, der auf dem Fingerträger montiert ist.

9. Vorrichtung nach einem der vorstehenden Ansprüche, wobei das Stellglied (30) ein piezoelektrisches Stellglied, vorzugsweise eine piezoelektrische Stapelung (34) ist.

10. Vorrichtung nach einem der vorstehenden Ansprüche, wobei die Vorrichtung in Bezug auf eine Symmetrieebene, die sich zwischen den beiden Wänden (120, 122), zwischen den beiden Armen (132, 134) und zwischen den beiden Endorganen (20, 22) befindet, symmetrisch ist.

## Claims

1. A device for a microactuator comprising
- a body (110),
- two terminal members (20, 22) articulated (136, 138; 236, 238) on the body (110), located on one side of the latter,
- two deformable bowl-shaped walls (120, 122) which face one another, arranged to house an actuator (30), two respective first edges (1202, 1222) of said walls (120, 122) located on one side being fastened (1264) on the body (110), whereas two respective second edges (1204, 1224) of said walls (120, 122) located on another side move consecutively to a deformation of the walls (120, 122) under the effect of the actuator (30),
- said movement being transmitted by two arms (132, 134) which terminate at the two respective terminal members (20, 22),
wherein the bowl-shaped walls (120, 122) each have a respective bottom (1200, 1220) against which the actuator (30) bears, and wherein the two terminal members (20, 22) are articulated on the body (110) by respective rods (1360, 1362, 1380, 1382; 2360, 2380), and wherein the two terminal members (20, 22) are articulated on the body (110) by two respective pairs of rods (1360, 1362; 1380, 1382) substantially parallel and of the same length, and wherein the ends (1322, 1342) of the rods (1360, 1362, 1380, 1382) on the terminal member (20, 22) side are substantially aligned, and wherein the deformation of the actuator (30) is a longitudinal expansion or a longitudinal contraction against the two bottoms (1200, 1220) of the walls (120, 122),
wherein an expansion of the actuator (30) against the two bottoms (1200, 1220) drives a coming closer together of the first edges (1202, 1222) and of the second edges (1204, 1224), by which the second edges (1204, 1224) symmetrically drive a relative coming closer together of the terminal members (20, 22) via arms (132, 134), and
wherein a contraction of the actuator (30) against the two bottoms (1200, 1220) drives a moving apart of the first edges (1202, 1222) and of the second edges (1204, 1224), by which the second edges (1204, 1224) symmetrically drive a relative moving apart of the terminal members (20, 22) via arms (132, 134).

2. The device according to claim 1, wherein the relative coming closer together and the relative moving apart of the terminal members is generally expressed along a linear travel (1300).

3. The device according to one of the preceding claims, wherein the two bowl-shaped walls (120, 122) generally form a diamond, hexagon or an oval.

4. The device according to one of the preceding claims, wherein the device (100) is made from a single piece.

5. The device according to one of the preceding claims, wherein the device (100) is formed from a profiled plate.

6. The device according to one of the preceding claims, wherein the device has an amplification factor greater than 30:1.

7. The device according to one of claims 2 to 11, wherein the rods (1360, 1362, 1380, 1382; 2360, 2380) and/or the arms (132, 134) are thinned at one or more of their ends (1320, 1322, 1340, 1342; 2362, 2382).

8. The device according to one of the preceding claims, wherein the microactuator is a microtechnology clamp, and the terminal members (20, 22) each comprise a finger carrier and a finger mounted on said finger carrier.

9. The device according to one of the preceding claims, wherein the actuator (30) is a piezoelectric actuator, preferably a piezoelectric stack (34).

10. The device according to one of the preceding claims, wherein the device is symmetrical with respect to a plane of symmetry located between the two walls (120, 122), between the two arms (132, 134) and between the two terminal members (20, 22).
